# EUROPÄISCHE PATENTANMELDUNG

(11) **EP 1 052 467 A1**
(43) Veröffentlichungstag der Anmeldung: **15.11.2000**
(21) Anmeldenummer: 00890095.3
(22) Anmeldetag: 23.03.2000
(51) Int. Cl.: F27B 7/33, F27B 7/32, C04B 20/06

(54) **Anlage zur Herstellung von Blähtongranulat**

(30) Priorität: 10.05.1999 AT 84599
(71) Anmelder: Österreichische Leca Gesellschaft m.b.H., 8350 Fehring (AT)
(72) Erfinder: Esterl, Johann, 8350 Fehring (AT)
(74) Vertreter: Gibler, Ferdinand, Dipl.Ing. Dr. techn.

(57) **Zusammenfassung**

Anlage zur Herstellung von Blähton-Granulat aus Rohton mit einem Drehrohrofen zur Trocknung und zum Brennen des Rohton-Granulats, wobei der Drehrohrofen (2) eine Einrichtung zur Entnahme (5) von getrocknetem Rohton-Granulat aufweist und eine Zerkleinerungseinrichtung (6) vorgesehen ist, deren Eingang (7) über die Entnahmeeinrichtung (5) beschickbar ist, und wobei über den Ausgang (8, 10) der Zerkleinerungseinrichtung eine Einrichtung zur Rückführung (13) des zerkleinerten Rohton-Granulats in den Drehrohrofen (2, 3) beschickbar ist, wobei in der Zerkleinerungseinrichtung (6) Rohton-Granulat eines vorbestimmbaren Komgrößenbereiches herstellbar ist.

## Beschreibung

Die Erfindung betrifft eine Anlage Anlage zur Herstellung von Blähton-Granulat aus Rohton mit einem Drehrohrofen zur Trocknung und zum Brennen des Rohton-Granulats.

Bei der Herstellung von Blähton-Granulat wird Rohton auf passende Größe zerteilt und fallweise mit einem Blähhilfsmittel versetzt, das bei hoher Temperatur in einem Drehrohrofen austreibt. Drehrohröfen sind für den Prozeß der Blähton-Herstellung besonders gut geeignet, weil durch den an deren Innenwandung abrollenden Rohton auf einfache Weise kleine Rohton-Kügelchen gebildet werden können.

Das entstehende poröse Gefüge hat verschiedene vorteilhafte Eigenschaften. Diese Vorverarbeitung und der herkömmliche Trockenvorgang, der vor dem Brennen durchgeführt wird, führt aber zu einer Korngrößenverteilung, die vor allem im unteren Bereich, z.B. von 1 bis 4 mm, eine sehr schwache Besetzung aufweist. Dieser untere Bereich der Korngrößenverteilung kann durch herkömmliche Maßnahmen wie Kneten und Zerteilen des Rohtons nicht erreicht werden.

Gerade aber Blähton dieser Größe wird für viele der bekannten Anwendungen von Blähton benötigt.

Aufgabe der Erfindung ist es daher, eine Anlage anzugeben, mit deren Hilfe eine ausgeglichene Korngrößenverteilung erzielt werden kann, mit der aber vor allem der untere Bereich der Rohton-Korngröße aufbereitet und hergestellt werden kann.

Erfindungsgemäß wird dies dadurch erreicht, daß der Drehrohrofen eine Einrichtung zur Entnahme von getrocknetem Rohton-Granulat aufweist, daß eine Zerkleinerungseinrichtung vorgesehen ist, deren Eingang über die Entnahmeeinrichtung beschickbar ist, und daß über den Ausgang der Zerkleinerungseinrichtung eine Einrichtung zur Rückführung des zerkleinerten Rohton-Granulats in den Drehrohrofen beschickbar ist, wobei in der Zerkleinerungseinrichtung Rohton-Granulat eines vorbestimmbaren Korngrößenbereiches herstellbar ist.

Ein Teil des Rohtons wird aus dem Drehrohrofen in die Zerkleinerungseinrichtung abgezweigt und dort zu passender Korngröße verarbeitet. Die so entstandenen Rohton-Körner entsprechen dem gewünschten Korngrößenbereich und werden nun dem Drehrohrofen erneut zugeführt. Durch die separate Zerkleinerungseinrichtung kann eine effiziente Korngrößenbereichseingrenzung vorgenommen werden. Der Drehrohrofen verfügt in den meisten Fällen über zumindest zwei unterschiedliche Zonen, wobei auf eine Trockenzone üblicherweise eine Brennzone folgt. An welcher Stelle des Drehrohrofens Rohton entnommen wird, kann im Rahmen der Erfindung frei gewählt werden. Dies kann sowohl in der Trockenzone als auch in der Brennzone erfolgen.

Weiters kann in vorteilhafter Weise die Zerkleinerungseinrichtung aus einem Walzwerk, einer Mühle od. dgl. gebildet sein. Das Walzwerk oder die Mühle führt das Zerbrechen des aus dem Drehrohrofen abgezweigten Materials durch, welches nach seiner Zerkleinerung wieder in den Drehrohrofen rückgeführt wird.

Für die rasche und reibungsarme Beförderung des zerbrochenen Rohtonmaterials in den Drehrohrofen zurück kann der Ausgang der Zerkleinerungseinrichtung aus einem Ausgangsschacht und einem Elevator gebildet sein, über dessen Ausgang ein Sammeltrichter beschickbar ist, in den die Rückführungseinrichtung eingreift.

In weiterer Ausbildung der Erfindung kann vorgesehen sein, daß die Entnahmeeinrichtung eine, vorzugsweise gasdichte, Zylinderummantelung umfaßt, welche die Außenwand des Drehrohrofens zumindest teilweise ringartig umgibt, wobei in der Außenwand eine oder mehrere in die Zylinderummantelung führende Durchgangsöffnungen vorgesehen sind, und daß zumindest eine Auslaßöffnung für das entnommene Granulat ausgebildet ist.

Die über die Durchgangsöffnungen in die Zylinderummantelung eintretenden Rohtonteilchen werden durch die Drehbewegung des Drehrohrofens in der Zylinderummantelung zur Auslaßöffnung geführt, von wo sie zur Zerkleinerungseinrichtung weiterbefördert werden.

Gemäß einer weiteren Ausführungsvariante der Erfindung kann vorgesehen sein, daß entlang des Verlaufs der Zylinderummantelung eine oder mehrere den Querschnitt der Zylinderummantelung abdeckende Ventilklappen ausgebildet sind, die für einen Granulatstrom im entgegengesetzten Drehsinn zur Drehrichtung des Drehrohrofens durchlässig sind.

Die in der Zylinderummantelung vorgesehenen Ventilklappen sollen eine Schleusenfunktion erfüllen, da immer zumindest eine der Klappen geschlossen bleibt, sodaß eine gleichbleibende Ofenatmosphäre im Drehrohrofen gewährleistet ist.

Gemäß einer weiteren Ausführungsform der Erfindung kann vorgesehen sein, daß die Rückführungseinrichtung eine, vorzugsweise gasdichte, Zylinderummantelung umfaßt, welche die Außenwand des Drehrohrofens zumindest teilweise ringartig umgibt, wobei zumindest eine äußere Eingangsöffnung und eine in den Drehrohrofen mündende Auslaßöffnung vorgesehen sind.

Dadurch erfolgt die Rückführung der zerkleinerten Rohtonteilchen mit Hilfe der Rotation des Drehrohrofens.

Weiters kann vorgesehen sein, daß entlang des Verlaufs der Zylinderummantelung eine oder mehrere den Querschnitt der Zylinderummantelung abdeckende Ventilklappen ausgebildet sind, die für einen Granulatstrom im entgegengesetzten Drehsinn zur Drehrichtung des Drehrohrofens durchlässig sind.

Auch hier sollen die in der Zylinderummantelung vorgesehenen Ventilklappen eine Schleusenfunktion erfüllen, da immer zumindest eine der Klappen geschlossen bleibt, sodaß eine gleichbleibende Ofenatmosphäre im Drehrohrofen gewährleistet ist.

Nachfolgend wird die Erfindung anhand der in den angeschlossenen Zeichnungen dargestellten Ausführungsbeispiele eingehend erläutert. Es zeigt dabei
Fig.1 eine Gesamtansicht einer Herstellungsanlage gemäß Stand der Technik;
Fig.2 eine teilweise Seitenansicht einer Ausführungsform der erfindungsgemäßen Herstellungsanlage;
Fig.3 einen Schnitt durch die Herstellungsanlage gemäß Fig.2;
Fig.4 einen weiteren Schnitt durch die Herstellungsanlage gemäß Fig.2 und
Fig.5 einen Schnitt einer weiteren Ausführungsform der erfindungsgemäßen Anlage.

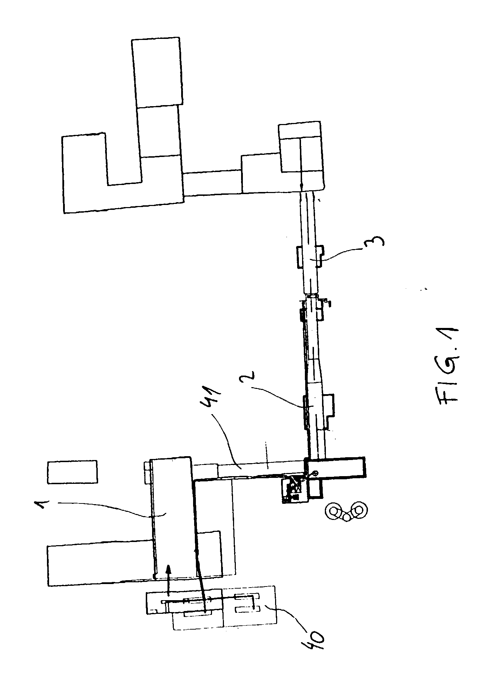

In Fig. 1 ist eine Gesamtansicht einer bereits bekannten Anlage zur Herstellung eines BlähtonGranulats aus Rohton gezeigt, die sich in mehrere Verarbeitungsstufen untergliedert. Über eine Beschickungseinrichtung 40 wird Rohton gemischt und einer Aufbereitungseinrichtung 1 zugeführt, die im wesentlichen aus einer Brech- und Knetvorrichtung gebildet ist und in der dem Rohton fallweise ein Blähhilfsmittel beigemischt wird. Der Rohton gelangt weiters über eine Fördereinrichtung 41 in einen Drehrohrofen 2, 3, der eine Trockenzone 2 und eine Brennzone 3 aufweist, die kontinuierlich ineinander übergehen können. Die in Fig.1 gezeigte Unterteilung in Trockenzone 2 und Brennzone 3 ist willkürlich, kann aber auch in anderer Weise geschehen und stellt keine Einschränkung der Erfindung dar. In der Trockenzone 2 wird das nunmehr bröckelige Rohtonmaterial durch Wälzbewegung unter Wärmeeinwirkung und unter Mitwirkung verschiedener Ofeneinbauten vorgetrocknet und granuliert. Danach gelangt das Rohtonmaterial in die Brennzone 3, in welcher der Blähprozeß durchgeführt wird.

Das Blähgase treiben aus und erzeugen die porige Grundstrukur des Blähtongranulats. Vom Ausgang des Drehrohrofens wird das fertige Blähgranulat in einen nicht dargestellten Kühler weiterbefördert.

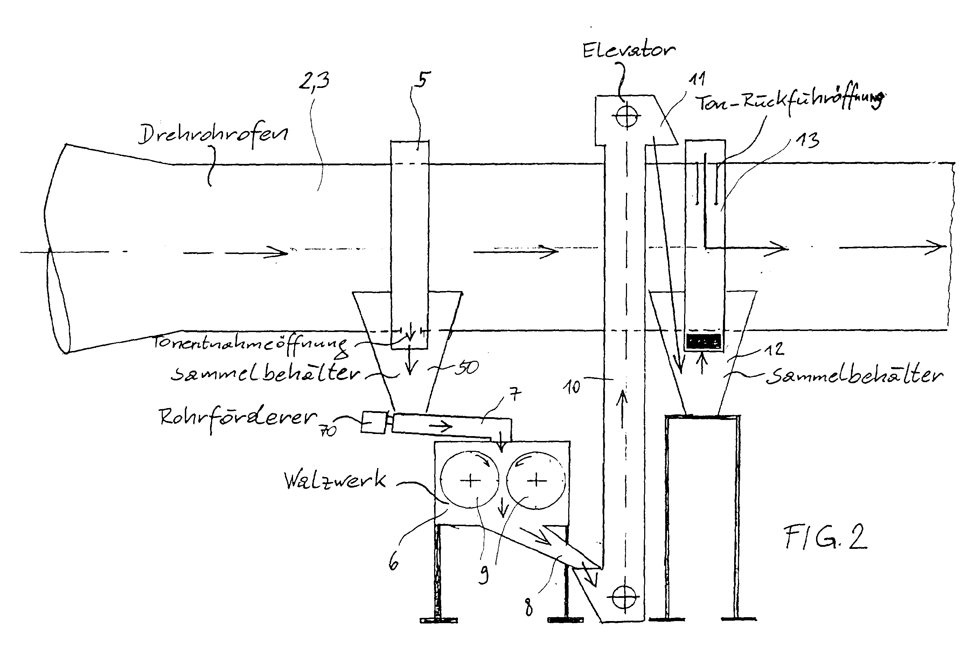

Bestimmte Korngrößenbereiche, die für das Endprodukt erforderlich sind, können auf die übliche Weise im Drehrohrofen 2, 3 nicht in erforderlicher Menge hergestellt werden. Die Bereitstellung dieser Korngrößenbereiche wird erfindungsgemäß dadurch erreicht, daß der Drehrohrofen 2, 3 unter Bezugnahme auf Fig. 2 eine Einrichtung zur Entnahme 5 von getrocknetem Rohton-Granulat aufweist und eine Zerkleinerungseinrichtung 6 vorgesehen ist, deren Eingang 7 über die Entnahmeeinrichtung 5 beschickbar ist. Ein Trichter 50 verhindert einen Überlauf der entnommenen Menge, die über einen Rohrförderer 70 zur Zerkleinerungseinrichtung 6 bewegt wird.

Über den Ausgang 8, 10 der Zerkleinerungseinrichtung 6 ist die Einrichtung zur Rückführung 13 des zerkleinerten Rohton-Granulats in den Drehrohrofen 2,3 beschickbar. In der Zerkleinerungseinrichtung 6 ist Rohton-Granulat eines vorbestimmbaren Korngrößebereiches herstellbar.

Die Zerkleinerungseinrichtung ist aus einem Walzwerk 6 gebildet, welches zwei parallel geführte Walzen 9 enthält, die je nach einstellbarem Parallelabstand die gewünschte Korngrößenverteilung liefert. Insbesondere der Bereich von 1mm bis 4mm Korngröße ist für die Produktion von Interesse, es kann aber jeder andere Korngrößenbereich eingestellt werden. Der Ausgang 8 der Zerkleinerungseinrichtung 6 ist aus einem Ausgangsschacht 8 und einem Elevator 10 gebildet, dessen Ausgang einen Sammeltrichter 12 beschickt, in den die Rückführungseinrichtung 13 eingreift. Die Zerkleinerungseinrichtung kann auch durch eine Mühle oder eine ähnliche Einrichtung gebildet sein.

Der Elevator 10 dient dabei lediglich der Beförderung des getrockneten und zerkleinerten Rohtonmaterials vom Ausgangsschacht 8 des Walzwerks 6 in den Sammeltrichter 12, aus dem die Rückführungseinrichtung 13 das zerkleinerte Material wieder entnimmt, um es dem Drehrohrofen 2, 3 zuzuführen.

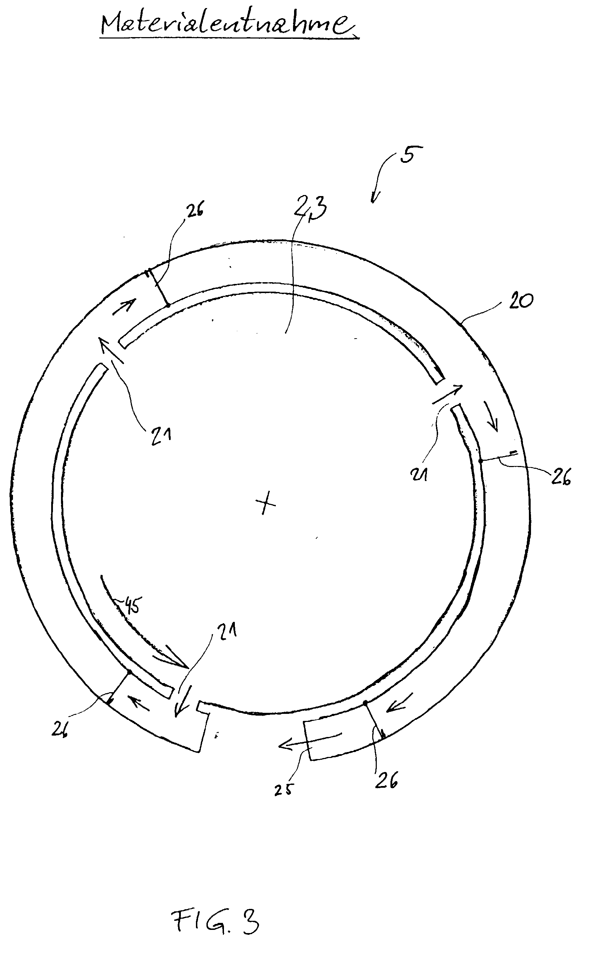

Die Entnahmeeinrichtung 5 ist in Fig.3 genauer dargestellt, welche die Drehbewegung des Drehrohrofens 2, 3 ausnützt, um einen Teil des im Drehrohrofen 2, 3 gewälzten Materials abzuzweigen und der Zerkleinerungseinrichtung 6 zuzuführen.

Dazu umfaßt die Entnahmeeinrichtung 5 eine gasdichte Zylinderummantelung 20, welche die Außenwand des Drehrohrofens 2, 3 zumindest teilweise ringartig umgibt, wobei eine oder mehrere in die Zylinderummantelung 20 führende Durchgangsöffnungen 21 vorgesehen sind.

Weiters sind eine oder mehrere, den Querschnitt der Zylinderummantelung 20 abdeckende Ventilklappen 26 ausgebildet, die für einen Granulatstrom im entgegengesetzten Drehsinn zur Drehrichtung des Drehrohrofens 2, 3 durchlässig sind. Die Funktion des erfindungsgemäßen Drehrohrofens 2, 3 ist aber auch ohne diese Ventilklappen 26 gewährleistet.

Es ist zumindest eine Auslaßöffnung 25 für das entnommene Granulat ausgebildet. Bei Drehung des Drehrohrofens 2,3 in Richtung des Pfeils 45 wird das innerhalb diesem befindliche Rohton-Granulat teilweise durch die Durchgangsöffnungen 21 in die Zylinderummantelung 20 gelangen. Aufgrund der wirkenden Schwerkraft wird eine in Gegenrichtung zur Drehrichtung wirkende Kraft auf das Rohton-Granulat ausgeübt, sodaß das Rohton-Granulat schließlich bis zur Auslaßöffnung 25 gelangt. Wie in Fig.3 gezeigt, können die Durchgangsöffnungen 21 an mehreren Stellen des inneren Umfangs des Drehrohrofens 2, 3 angebracht sein. Ihre Anzahl, Größe und Anordnung ist in keiner Weise eingeschränkt. Die Funktion der Klappen 26 verhindert das Austreten der warmen Ofengase.

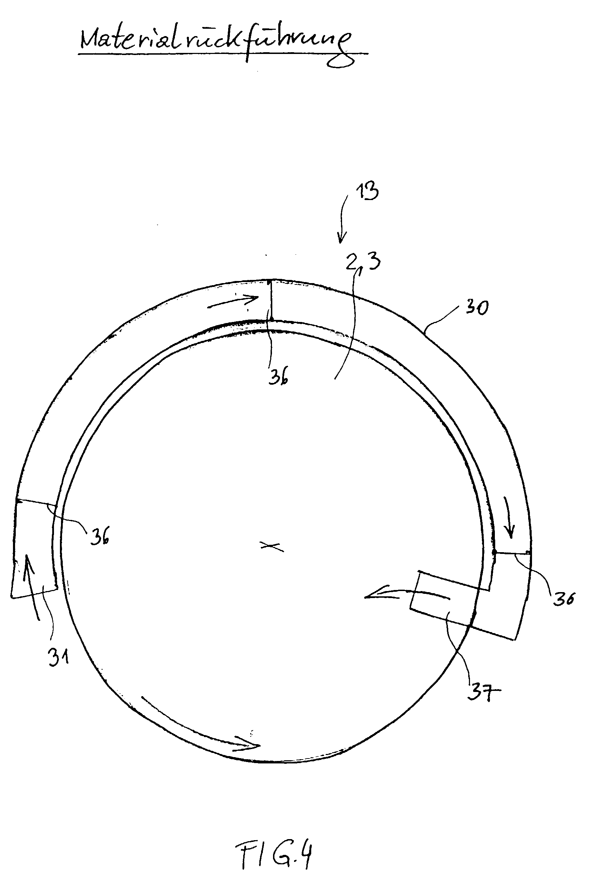

Die in Fig.4 gezeigte Rückführungseinrichtung 13 ist ähnlich wie die Entnahmeeinrichtung mit einer gasdichten Zylinderummantelung 30 aufgebaut, welche die Außenwand des Drehrohrofens 2, 3 zumindest teilweise ringartig umgibt, wobei zumindest eine äußere Eingangsöffnung 31 und eine in den Drehrohrofen 2, 3 mündende Auslaßöffnung 37 vorgesehen sind. Bei Rotation des Drehrohrofens greift die Eingangsöffnung 31 in das im Trichter 12 befindliche Material ein, sodaß ein Teil desselben innerhalb der Zylinderummantelung gegen den Drehsinn weiterbefördert wird.

Auch hier sind eine oder mehrere den Querschnitt der Zylinderummantelung 30 abdeckende Ventilklappen 36 ausgebildet, die nur für einen Granulatstrom im entgegengesetzten Drehsinn zur Drehrichtung des Drehrohrofens 3 durchlässig sind und zudem die Ofengase an einem Austritt hindern. Diese Ventilklappen 36 können bei Bedarf auch weggelassen werden.

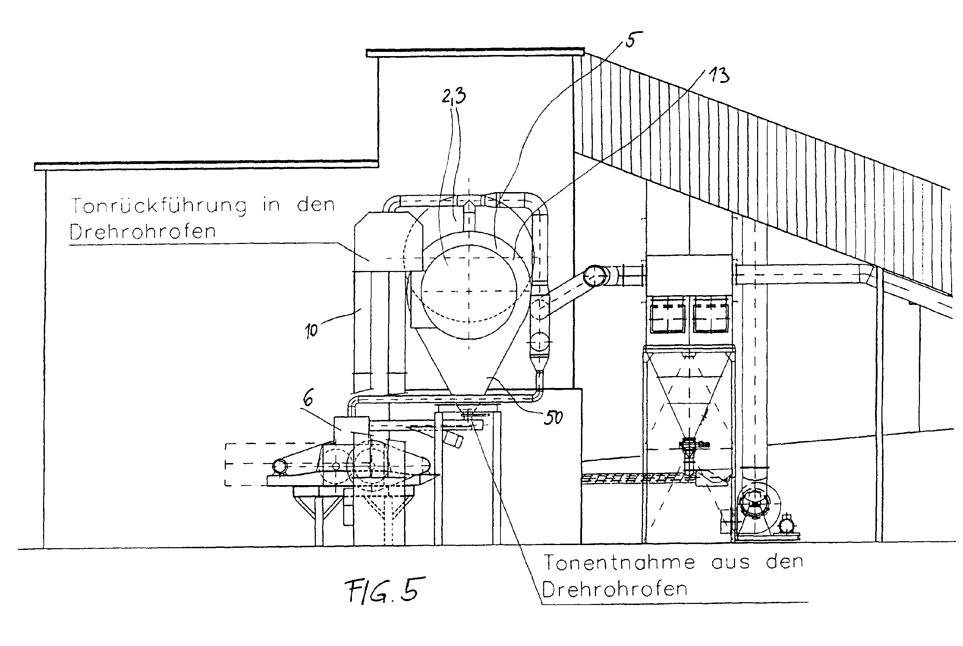

Über die Auslaßöffnung 37 gelangt das zerkleinerte Material wieder in das Innere des Drehrohrofens 2, 3. Damit wird das zerkleinerte Material dem restlichen Material wieder zugeführt, sodaß dieses zusammen mit dem zerkleinerten Material in die Brennzone 3 gelangt und dort gebrannt wird, wobei die gewünschte Korngrößenverteilung erreicht wird. Fig.5 zeigt eine weitere Ausführungsform der Erfindung mit den bisher verwendeten Bezugszeichen.

## Patentansprüche

1. Anlage zur Herstellung von Blähton-Granulat aus Rohton mit einem Drehrohrofen zur Trocknung und zum Brennen des Rohton-Granulats, **dadurch gekennzeichnet**, daß der Drehrohrofen (2,3) eine Einrichtung zur Entnahme (5) von getrocknetem Rohton-Granulat aufweist, daß eine Zerkleinerungseinrichtung (6) vorgesehen ist, deren Eingang (7) über die Entnahmeeinrichtung (5) beschickbar ist, und daß über den Ausgang (8, 10) der Zerkleinerungseinrichtung eine Einrichtung zur Rückführung (13) des zerkleinerten Rohton-Granulats in den Drehrohrofen (2, 3) beschickbar ist, wobei in der Zerkleinerungseinrichtung (6) Rohton-Granulat eines vorbestimmbaren Korngrößenbereiches herstellbar ist.

2. Anlage nach Anspruch 1, **dadurch gekennzeichnet**, daß die Zerkleinerungseinrichtung aus einem Walzwerk (6), einer Mühle o. dgl. gebildet ist.

3. Anlage nach Anspruch 1 oder 2, **dadurch gekennzeichnet**, daß der Ausgang der Zerkleinerungseinrichtung aus einem Ausgangsschacht (8) und einem Elevator (10) gebildet ist, über dessen Ausgang ein Sammeltrichter (12) beschickbar ist, in den die Rückführungseinrichtung (13) eingreift.

4. Anlage nach einem der Ansprüche 1 bis 3, **dadurch gekennzeichnet**, daß die Entnahmeeinrichtung eine, vorzugsweise gasdichte, Zylinderummantelung (20) umfaßt, welche die Außenwand des Drehrohrofens (2, 3) zumindest teilweise ringartig umgibt, wobei in der Außenwand eine oder mehrere in die Zylinderummantelung (20) führende Durchgangsöffnungen (21) vorgesehen sind, und daß zumindest eine Auslaßöffnung (25) für das entnommene Granulat ausgebildet ist.

5. Anlage nach Anspruch 4, **dadurch gekennzeichnet**, daß entlang des Verlaufs der Zylinderummantelung eine oder mehrere den Querschnitt der Zylinderummantelung (20) abdeckende Ventilklappen ausgebildet sind, die für einen Granulatstrom im entgegengesetzten Drehsinn zur Drehrichtung des Drehrohrofens (3) durchlässig sind.

6. Anlage nach einem der Ansprüche 1 bis 5, **dadurch gekennzeichnet**, daß die Rückführungseinrichtung eine, vorzugsweise gasdichte, Zylinderummantelung (30) umfaßt, welche die Außenwand des Drehrohrofens (2, 3) zumindest teilweise ringartig umgibt, wobei zumindest eine äußere Eingangsöffnung (31) und eine in den Drehrohrofen (2, 3) mündende Auslaßöffnung (37) vorgesehen sind.

7. Anlage nach Anspruch 6, **dadurch gekennzeichnet**, daß entlang des Verlaufs der Zylinderummantelung (30) eine oder mehrere den Querschnitt der Zylinderummantelung (30) abdeckende Ventilklappen (36) ausgebildet sind, die für einen Granulatstrom im entgegengesetzten Drehsinn zur Drehrichtung des Drehrohrofens (2, 3) durchlässig sind.
